# EUROPEAN PATENT APPLICATION

(11) **EP 4 006 607 A1**
(43) Date of publication of application: **01.06.2022**
(21) Application number: 20847225.8
(22) Date of filing: 20.07.2020
(51) Int. Cl.: G02B 7/04, G02B 7/10, G02B 7/28

(54) **LENS MODULE, CONTROL METHOD OF LENS MODULE, IMAGING DEVICE, AND ELECTRONIC APPARATUS**

(30) Priority: 29.07.2019 CN 201910689683
(71) Applicant: GUANGDONG OPPO MOBILE TELECOMMUNICATIONS CORP., LTD., Dongguan, Guangdong 523860 (CN)
(72) Inventor: LYU, Xiangnan, Guangdong 523860 (CN)
(74) Representative: Taor, Simon Edward William
(86) International application number: PCT/CN2020/103082
(87) International publication number: WO 2021/017926

(57) **Abstract**

Provided are a lens module (10) and a control method thereof, an imaging device (70), and an electronic device (130). The lens module (10) includes a first lens group (311), a first magnetic element (321), and a plurality of first magnetoelectric sensors. A movement channel (P3) of the first lens group (311) includes a plurality of focusing sections. The first lens group (311) is movable in each of the plurality of focusing sections to perform focusing. The plurality of first magnetoelectric sensors is configured to determine a position of the first lens group (311).

## Description

### CROSS-REFERENCE TO RELATED APPLICATION

The present application claims the priority of Chinese Patent Application No. 201910689683.9, filed with China National Intellectual Property Administration on July 29, 2019, the entire disclosure of which is incorporated herein by reference.

### FIELD

The present disclosure relates to imaging technologies, and more particularly, to a lens module, a control method of a lens module, an imaging device, and an electronic device.

### BACKGROUND

At present, with the continuous advance of terminal technology and optical technology, users can use a zoom lens of an electronic device to photograph objects, and capture clear images by changing a focal length of the zoom lens. For example, the focal length of the zoom lens can be adjusted by optical zooming.

### SUMMARY

Embodiments of the present disclosure provide a lens module, a control method of a lens module, an imaging device, and an electronic device.

The lens module according to an embodiment of the present disclosure includes a movable first lens group, a first magnetic element arranged on the first lens group, and a plurality of first magnetoelectric sensors corresponding to the first magnetic element. A movement channel of the first lens group includes a plurality of focusing sections, the first lens group is movable in each of the plurality of focusing sections to perform focusing, each of the plurality of focusing sections corresponds to at least one of the plurality of first magnetoelectric sensors, and the plurality of first magnetoelectric sensors is configured to sense a position of the first magnetic element to determine a position of the first lens group.

The control method according to an embodiment of the present disclosure can be applied to a lens module. The lens module includes a movable first lens group, a first magnetic element arranged on the first lens group, and a plurality of first magnetoelectric sensors corresponding to the first magnetic element. Each of a plurality of focusing sections corresponds to at least one of the plurality of first magnetoelectric sensors. The control method includes: controlling the plurality of first magnetoelectric sensors to sense a position of the first magnetic element to determine a position of the first lens group; and controlling, based on the position of the first lens group, the first lens group to move in the plurality of focusing sections to perform focusing.

The imaging device according to an embodiment of the present disclosure includes a lens module and an image sensor. The lens module includes a movable first lens group, a first magnetic element arranged on the first lens group, and a plurality of first magnetoelectric sensors corresponding to the first magnetic element, a movement channel of the first lens group includes a plurality of focusing sections, the first lens group is movable in each of the plurality of focusing sections to perform focusing, each of the plurality of focusing sections corresponds to at least one of the plurality of first magnetoelectric sensors, and the plurality of first magnetoelectric sensors is configured to sense a position of the first magnetic element to determine a position of the first lens group. The lens module is configured to condense light for the image sensor.

The electronic device according to an embodiment of the present disclosure includes a housing and an imaging device. The imaging device includes a lens module and an imaging sensor; the lens module includes a movable first lens group, a first magnetic element arranged on the first lens group, and a plurality of first magnetoelectric sensors corresponding to the first magnetic element; a movement channel of the first lens group includes a plurality of focusing sections, the first lens group is movable in each of the plurality of focusing sections to perform focusing; each of the plurality of focusing sections corresponds to at least one of the plurality of first magnetoelectric sensors; and the plurality of first magnetoelectric sensors is configured to sense a position of the first magnetic element to determine a position of the first lens group. The lens module is configured to condense light for the image sensor. The imaging device is arranged in the housing.

Additional aspects and advantages of the present disclosure will be given at least in part in the following description, or become apparent at least in part from the following description, or can be learned from practicing of the present disclosure.

### BRIEF DESCRIPTION OF DRAWINGS

The above and/or additional aspects and advantages of the present disclosure will become more apparent and more understandable from the following description of embodiments in conjunction with the accompanying drawings, in which:
FIG. 1 is a schematic structural diagram of a lens module in the related art;
FIG. 2 is a schematic diagram illustrating parameters of a magnetoelectric sensor in the related art;
FIG. 3 is a schematic structural diagram of a first lens group according to some embodiments of the present disclosure;
FIG. 4 is a schematic structural diagram of a first lens group according to some embodiments of the present disclosure;
FIG. 5 is a schematic structural diagram of a first lens group according to some embodiments of the present disclosure;
FIG. 6 is a schematic structural diagram of a lens module according to some embodiments of the present disclosure;
FIG. 7 a schematic structural diagram of an imaging device according to some embodiments of the present disclosure;
FIG. 8 is a schematic structural diagram of a first lens group according to some embodiments of the present disclosure;
FIG. 9 is a schematic structural diagram of a first lens group according to some embodiments of the present disclosure;
FIG. 10 to FIG. 12 are flowcharts illustrating a control method of a lens module according to some embodiments of the present disclosure.
FIG. 13 is a schematic diagram of an electronic device according to some embodiments of the present disclosure.

### DESCRIPTION OF EMBODIMENTS

Embodiments of the present disclosure will be described in detail below with reference to the accompanying drawings illustrating the embodiments, throughout which same or similar elements, or elements having same or similar functions, are denoted by same or similar reference numerals. The embodiments described below with reference to the drawings are illustrative and intended to explain, rather than limiting, the present disclosure.

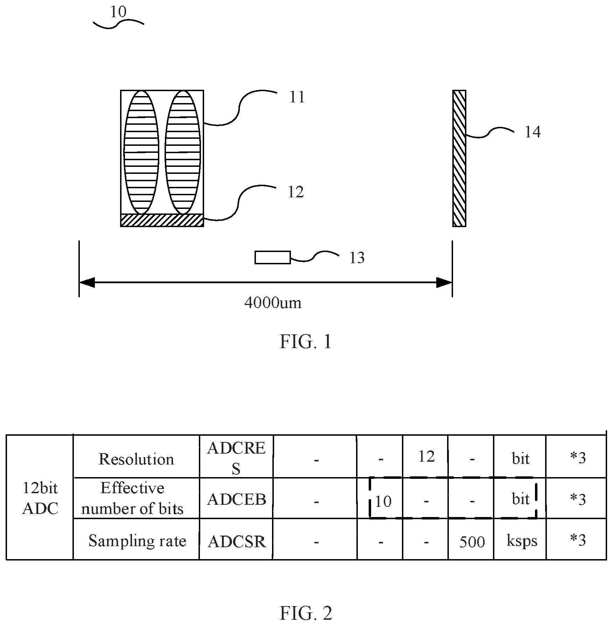

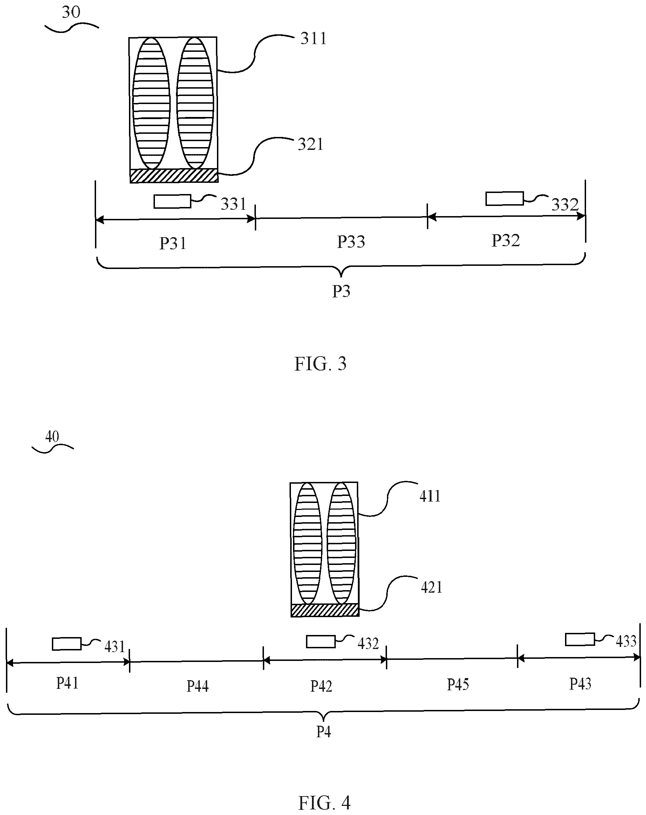

Referring to FIG. 1 and FIG. 3, a lens module 10 according to an embodiment of the present disclosure includes a movable first lens group 311, a first magnetic element 321 arranged on the first lens group 311, and a plurality of first magnetoelectric sensors 13 corresponding to the first magnetic element 321. A movement channel P3 of the first lens group 311 includes a plurality of focusing sections. The first lens group 311 is movable in each of the plurality of focusing sections to perform focusing. Each focusing section corresponds to at least one of the plurality of first magnetoelectric sensors 13. The first magnetoelectric sensor 13 is configured to sense a position of the first magnetic element 321 to determine a position of the first lens group 311.

Referring to FIG. 3, in some embodiments, the movement channel P3 of the first lens group 311 further includes a zooming section, through which the first lens group 311 is capable of switching among the plurality of focusing sections to perform zooming.

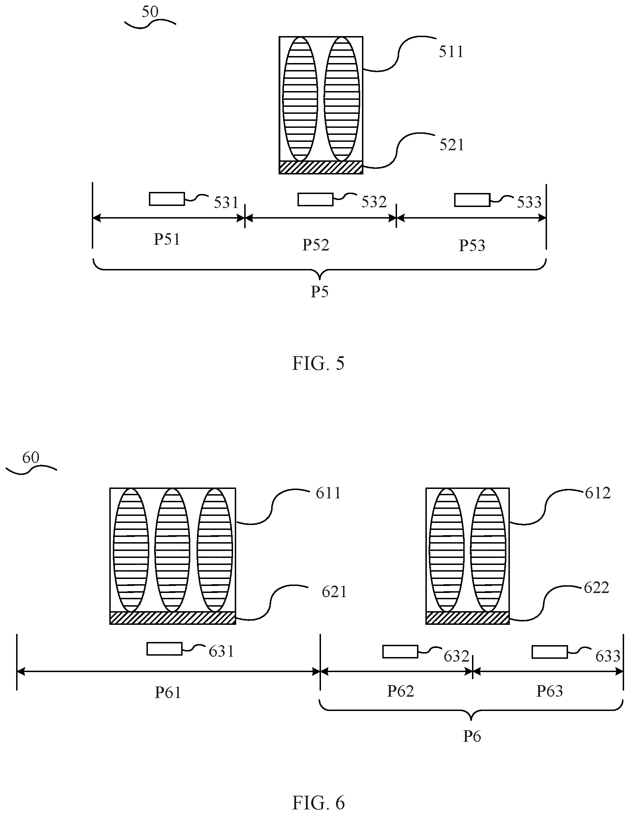

Referring to FIG. 6, in some embodiments, the lens module 60 further includes a second lens group 611, a second magnetic element 621 arranged on the second lens group 611, and a second magnetoelectric sensor 631 corresponding to the second magnetic element 621. The second lens group 611 is movable to perform zooming, and the second magnetoelectric sensor 631 is configured to sense a position of the second magnetic element 621 to determine a position of the second lens group 611.

Referring to FIG. 3, in some embodiments, the first magnetoelectric sensor 331 has a predetermined number of significant digits, an error smaller than a predetermined distance is tolerable during the focusing of the first lens group 311, and a number of the at least one first magnetoelectric sensor 331 corresponding to each focusing section is determined based on a length of each focusing section, the predetermined number, and the predetermined distance.

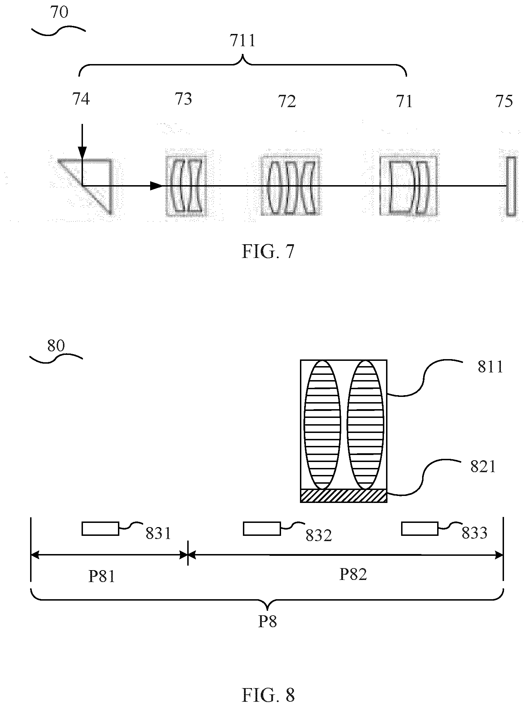

Referring to FIG. 8, in some embodiments, the predetermined number is 10, the predetermined distance is 1 micrometer, the length of each focusing section is smaller than 1,024 micrometers, and each focusing section corresponds to one magnetoelectric sensor.

Referring to FIG. 1, FIG. 3, and FIG. 10, in a control method of the lens module 10 according to an embodiment of the present disclosure, the lens module 10 includes the movable first lens group 311, the first magnetic element 321 arranged on the first lens group 311, and the plurality of first magnetoelectric sensors 13 corresponding to the first magnetic element 321; the movement channel P3 of the first lens group 311 includes the plurality of focusing sections, each focusing section corresponds to at least one of the plurality of first magnetoelectric sensors 13; the control method includes: 0101, controlling the plurality of first magnetoelectric sensors 13 to sense a position of the first magnetic element 321 to determine a position of the first lens group 311; and 0102, controlling, based on the position of the first lens group 311, the first lens group 311 to move in the plurality of focusing sections to perform focusing.

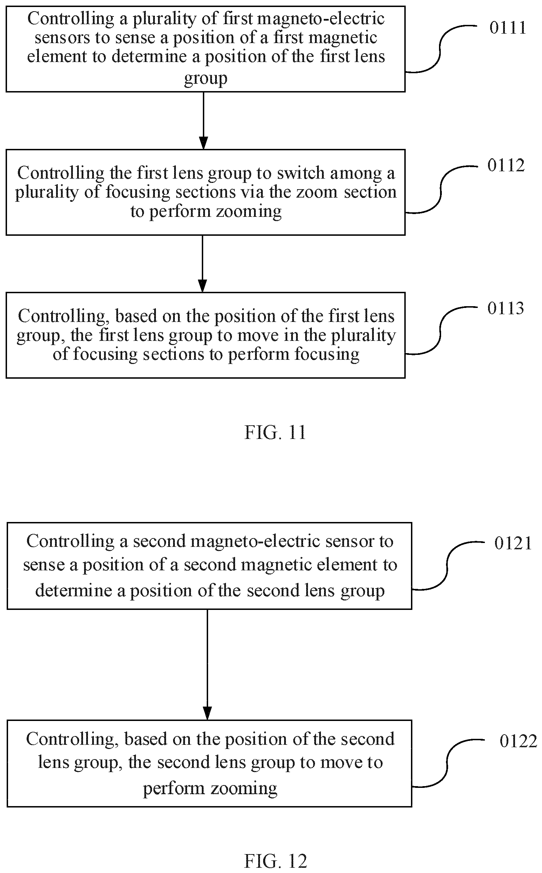

Referring to FIG. 3 and FIG. 11, in some embodiments, the movement channel P3 of the first lens group 311 further includes a zooming section, and the control method of the lens module 10 further includes: 0113, controlling the first lens group 311 to switch between the plurality of focusing sections via the zooming section to perform zooming.

Referring to FIG. 6 and FIG. 12, in some embodiments, the lens module 60 further includes the second lens group 611, the second magnetic element 621 arranged on the second lens group 611, and the second magnetoelectric sensor 631 corresponding to the second magnetic element 621; and the control method of the lens module 60 further includes: 0121, controlling the second magnetoelectric sensor 631 to sense a position of the second magnetic element 621 to determine a position of the second lens group 611; and 0122, controlling, based on the position of the second lens group 611, the second lens group 611 to move to perform the zooming.

Referring to FIG. 3, in some embodiments, the first magnetoelectric sensor 331 has a predetermined number of significant digits, an error smaller than a predetermined distance is tolerable during the focusing of the first lens group 311, and a number of the at least one first magnetoelectric sensors 331 corresponding to each focusing section is determined based on a length of each focusing section, the predetermined number, and the predetermined distance.

Referring to FIG. 8, in some embodiments, the predetermined number is 10, the predetermined distance is 1 micrometer, the length of each of the plurality of focusing sections is smaller than 1,024 micrometers, and each focusing section corresponds to one first magnetoelectric sensor.

Referring to FIG. 1, FIG. 3, and FIG. 7, an imaging device 70 according to an embodiment of the present disclosure includes the lens module 10 and an image sensor 75. The lens module 10 is configured to condense light for the image sensor 75. The lens module 10 includes the movable first lens group 311, the first magnetic element 321 arranged on the first lens group 311, and the plurality of first magnetoelectric sensors 13 corresponding to the first magnetic element 321. The movement channel P3 of the first lens group 311 includes the plurality of focusing sections, the first lens group 311 is movable in each focusing section to perform focusing, each focusing section corresponds to at least one of the plurality of first magnetoelectric sensors 13, and the magnetoelectric sensor 13 is configured to sense the position of the first magnetic element 321 to determine the position of the first lens group 311.

Referring to FIG. 3, in some embodiments, the movement channel P3 of the first lens group 311 further includes a zooming section, through which the first lens group 311 is capable of switching among the plurality of focusing sections to perform zooming.

Referring to FIG. 6, in some embodiments, the lens module 60 further includes the second lens group 611, the second magnetic element 621 arranged on the second lens group 611, and the second magnetoelectric sensor 631 corresponding to the second magnetic element 621, the second lens group 611 is movable to perform zooming, and the second magnetoelectric sensor 631 is configured to sense a position of the second magnetic element 621 to determine a position of the second lens group 611.

Referring to FIG. 3, in some embodiments, the first magnetoelectric sensor 331 has a predetermined number of significant digits, an error smaller than a predetermined distance is tolerable during the focusing of the first lens group 311, and a number of the at least one first magnetoelectric sensors 331 corresponding to each focusing section is determined based on a length of each focusing section, the predetermined number, and the predetermined distance.

Referring to FIG. 8, in some embodiments, the predetermined number is 10, the predetermined distance is 1 micrometer, the length of each of the plurality of focusing sections is smaller than 1,024 micrometers, and each of the plurality of focusing sections corresponds to one magnetoelectric sensor.

Referring to FIG. 1, FIG. 3, FIG. 7, and FIG. 13, an electronic device 130 according to an embodiment of the present disclosure includes a housing 131, and an imaging device 70 arranged in the housing 131. The imaging device 70 includes the lens module 10 and the imaging sensor 75. The lens module 10 is configured to condense light for the image sensor 75. The lens module 10 includes the movable first lens group 311, the first magnetic element 321 arranged on the first lens group 311, and the plurality of first magnetoelectric sensors 13 corresponding to the first magnetic element 321. The movement channel P3 of the first lens group 311 includes the plurality of focusing sections, the first lens group 311 is movable in each focusing section to perform focusing. Each focusing section corresponds to at least one of the plurality of first magnetoelectric sensors 13. The plurality of first magnetoelectric sensors 13 is configured to sense the position of the first magnetic element 321 to determine the position of the first lens group 311.

Referring to FIG. 3, in some embodiments, the movement channel P3 of the first lens group 311 further includes a zooming section, through which the first lens group 311 is capable of switching among the plurality of focusing sections to perform zooming.

Referring to FIG. 6, in some embodiments, the lens module 60 further includes the second lens group 611, the second magnetic element 621 arranged on the second lens group 611, and the second magnetoelectric sensor 631 corresponding to the second magnetic element 621; the second lens group 611 is movable to perform zooming, and the second magnetoelectric sensor 631 is configured to sense the position of the second magnetic element 621 to determine the position of the second lens group 611.

Referring to FIG. 3, in some embodiments, the first magnetoelectric sensor 331 has a predetermined number of significant digits, an error smaller than a predetermined distance is tolerable during the focusing of the first lens group 311, and a number of the at least one first magnetoelectric sensors 331 corresponding to each focusing section is determined based on a length of each focusing section, the predetermined number, and the predetermined distance.

Referring to FIG. 8, in some embodiments, the predetermined number is 10, the predetermined distance is 1 micrometer, the length of each of the plurality of focusing sections is smaller than 1,024 micrometers, and each focusing section corresponds to one magnetoelectric sensor.

Referring to FIG. 1, in the related art, a magnetic element 12 may be arranged on a lens group 11. When a lens module 10 is to perform zooming or focusing, a controller of the electronic device (not shown) can control the lens group 11 to move. During the movement of the lens group 11, a magnetoelectric sensor 13 of the lens module 10 can detect a position of the magnetic element 12 based on magnetoelectric induction between the magnetoelectric sensor 13 and the magnetic element 12, so as to determine a position of the lens group 11. The magnetoelectric sensor 13 generates an analog electric signal based on the magnetoelectric induction and transmits the analog electric signal to a driving chip (not shown). The driving chip performs an analog-to-digital conversion on the analog electric signal to obtain a digital quantized value, and transmits the digital quantized value to the controller. The controller obtains the position of the magnetic element 12 based on the digital quantized value, thereby determining the position of the lens group 11.

In the above manner, during the movement of the lens group 11, the longer the distance between the magnetoelectric sensor 13 and the magnetic element 12, the weaker the analog electric signal output by the magnetoelectric sensor 13; and the shorter the distance between the magnetoelectric sensor 13 and the magnetic element 12, the stronger the analog electric signal output by the magnetoelectric sensor 13. The analog electrical signal output by the magnetoelectric sensor 13 can be quantified by the driving chip. In combination with FIG. 2, significant digits of the analog-to-digital conversion of the driving chip in the related art are 10 bits, and thus 210=1,024 quantized values can be obtained. With the 1,024 quantized values, the analog electrical signal can be quantized. In the related art, one magnetoelectric sensor 13 is used to detect an entire movement process of the lens group 11. However, when the movement channel of the lens group 11 may be relatively long, for example, 4,000µm, a measurement accuracy of the magnetoelectric sensor 13 is 4,000um÷1,024 ≈ 4µm by using the 1,024 quantized values to represent the movement channel of 4,000 micrometers. That is, a minimum distance of movement of the lens group 11 that can be detected by the magnetoelectric sensor 13 is approximately 4µm. During the focusing, a focusing accuracy of the lens module 10 is generally required to be smaller than or equal to 1µm, in order to ensure the lens module 10 to focus accurately and output a clear image. However, from the above description, it can be seen that the magnetoelectric sensor 13 has a relatively low measurement accuracy that fails to satisfy the measurement accuracy of 1µm. Therefore, optical lenses may be unable to achieve accurate focusing, resulting in blurred images.

Referring to FIG. 3, a lens module 30 according to an embodiment of the present disclosure includes a movable first lens group 311, a first magnetic element 321 arranged on the first lens group 311, and a plurality of first magnetoelectric sensors corresponding to the first magnetic element 321. A movement channel P3 of the first lens group 311 includes a plurality of focusing sections. The first lens group 311 is movable in each focusing section to perform focusing. Each focusing section corresponds to at least one of the plurality of first magnetoelectric sensors. The first magnetoelectric sensor is configured to sense a position of the first magnetic element 321 to determine a position of the first lens group 311.

In the related art, due to the poor adjustment accuracy of zoom lenses, the zoom lenses may not be able to achieve accurate focusing, and thus the captured images may be blurry. Since the movement channel P3 of the first lens group 311 includes the plurality of focusing sections and at least one first magnetoelectric sensor is arranged in each focusing section, the first magnetoelectric sensors and the first magnetic element 321 mutually cooperate to equivalently shorten a sensing length of each first magnetoelectric sensor to the first magnetic element 321. Consequently, the position of the first magnetic element 321 can be more accurately determined to determine the position of the first lens group 311, thereby achieving precise focusing of the lens module 30 and allowing the images captured by the lens module 30 to be clearer. In addition, since the sensing length of each first magnetoelectric sensor to the first magnetic element 321 is equivalently shortened, the precise focusing can be achieved by using the existing magnetoelectric sensors without requiring a redesign of the magnetoelectric sensors (the redesign of the magnetoelectric sensors is costly), thereby lowering the production cost of the lens module 30.

The first lens group 311 may be of a single-piece type or a multi-piece type, which is not limited in the embodiments of the present disclosure. It should be noted that the first magnetic element 321 may be a magnet, and the first magnetoelectric sensor may be a Hall sensor. Here, the first lens group 311 moves as a whole.

With continued reference to FIG. 3, the movement channel P3 of the first lens group 311 may further include a zooming section P33, through which the first lens group 311 is capable of switching among the plurality of focusing sections to perform zooming. The movement channel of the first lens group 311 includes the zooming section P33 and the plurality of focusing sections. One, two, or more zooming sections P33 may be provided. The zooming section P33 may be located between two focusing sections. By providing the zooming section P33, the movement channel P3 of the first lens group 311 can be extended, thereby facilitating exerting a zoom function by the lens module 30 and expanding a scope of application of the lens module 30. For example, when a zoom factor of the lens module 30 includes a first zoom factor and a second zoom factor, the movement channel P3 of the first lens group 311 may include two focusing sections, i.e., a first focusing section P31 corresponding to the first zoom factor and a second focusing section P32 corresponding to the second zoom factor. The movement channel P3 of the first lens group 311 further includes the zooming section P33. The zooming section P33 is arranged between the first focusing section P31 and the second focusing section P32. Through the zooming section P33, the first lens group 311 is movable between the first focusing section P31 and the second focusing section P32 to perform zooming. One or more first magnetoelectric sensors may be correspondingly provided in the zooming section P33. When the first lens group 311 is located in the zooming section P33, the first magnetic element 321 can be sensed by the first magnetoelectric sensor corresponding to the zooming section P33 to determine the position of the first magnetic element 321 in the zooming section P33, thereby determining the position of the first lens group 311. It is also possible that no first magnetoelectric sensor is provided in the zooming section P33. In this case, when the first lens group 311 moves in the zooming section P33, the position of the first lens group 311 is not confirmed, the first lens group 311 is moved to the first focusing section P31 or the second focusing section P32 via the zooming section P33, and then the position of the first lens group 311 is detected by the first magnetoelectric sensor 331 corresponding to the first focusing section P31 or the first magnetoelectric sensor 332 corresponding to the second focusing section. By omitting the first magnetoelectric sensor in the zooming section P33, the production cost of the lens module 30 can be saved.

In practical applications, a position in a section where the first lens group 311 is located can be determined by the first magnetoelectric sensor, and then the first lens group 311 is moved to a focusing section corresponding to a target zoom factor based on the user's requirements. A position of the magnetic element 321 on the first lens group 311 is determined by the first magnetoelectric sensor that corresponds to the focusing section corresponding to the target zoom factor. The first magnetoelectric sensor outputs an analog electric signal to a controller (not shown), and the controller controls the first lens group 311 to move on the focusing section to perform the zooming. For example, when the user needs to take pictures with the second zoom factor, if the first lens group 311 is currently in the first focusing section P31, the controller can control the first lens group 311 to move from the first focusing section P31 to any position in the second focusing section P32 via the zooming section P33. During the movement, the first magnetoelectric sensor 331 on the first focusing section P31 can be used to sense the first magnetic element 321 for determining the position of the first lens group 311. When the first lens group 311 reaches the second focusing section P32, the first magnetoelectric sensor 332 in the second focusing section P32 is used to sense the first magnetic element 321, and the sensed position information is transmitted to the controller. The controller can control, based on the sensed position information, the first lens group 311 to perform focusing, so as to capture a target image.

Referring to FIG. 4, when the zoom factor of a lens module 40 includes a first zoom factor, a second zoom factor, and a third zoom factor, a movement channel P4 of a first lens group 411 includes three focusing sections, i.e., a first focusing section P41 corresponding to the first zoom factor, a second focusing section P42 corresponding to the second zoom factor, and a third focusing section P43 corresponding to the third zoom factor. The movement channel P4 of the first lens group 411 also includes two zooming sections, i.e., a zooming section P44 located between the first focusing section P41 and the second focusing section P42, and a zooming section P45 located between the second focusing section P42 and the third focusing section P43. Through these two zooming sections, the first lens group 411 can be move in the first focusing section P41, the second focusing section P42, and the third focusing section P43 to perform the zooming. One or more first magnetoelectric sensors may be provided in the two zooming sections, or no first magnetoelectric sensor may be provided in the two zooming sections, which is not limited in the present disclosure. In addition, referring to FIG. 5, in some embodiments, a movement channel P5 of a lens module 50 includes a first focusing section P51, a second focusing section P52, and a third focusing section P53. The first focusing section P51, the second focusing section P52, and the third focusing section P53 may also be adjacent to each other, which is not specifically limited in the present disclosure.

Referring to FIG. 6, the lens module 60 according to an embodiment of the present disclosure further includes a second lens group 611, a second magnetic element 621 arranged on the second lens group 611, and a second magnetoelectric sensor 631 corresponding to the second magnetic element 621. The second lens group 611 is movable on a movement channel P61 to perform zooming, and the second magnetoelectric sensor 631 is configured to sense a position of the second magnetic element 621 to determine a position of the second lens group 611. Here, the second magnetic element 621 and the first magnetic element 622 may be made of the same material, and the second magnetic element 621 may be a magnet. During a zooming process of the lens module 60, the first lens group 622 moves on a movement section P6, and the second lens group 611 moves on the movement section P61 to perform the zooming. The first lens group 622 and the second lens group 612 may move simultaneously, thereby cooperatively performing the zooming. During a focusing process of the lens module 60, only the first lens group 612 is required to move in a focusing section P62 to perform the focusing, while the second lens group 611 stands still in the movement section P61, which is more conducive to the precise focusing of the lens module 60 and simplifies the operations. Since the second lens group 611 is only used for zooming, not for focusing, and accuracy requirements for zooming are generally lower than accuracy requirements for focusing, significant digits of the analog-to-digital conversion corresponding to the second magnetoelectric sensor 621 can generally meet the requirements for zooming. Therefore, only one second magnetoelectric sensor 631 corresponding to the second lens group 611 can be provided, thereby saving the production cost of the lens module 60.

Referring to FIG. 7, the lens module 70 according to an embodiment of the present disclosure further includes a third lens group 73; the second lens group 72 is located between the first lens group 71 and the third lens group 73, and the third lens group 73 is fixedly arranged. A prism 74 is provided on a side of the third lens group 73 facing away from the second lens group 72. The prism 74 may be a reflective prism. The reflective prism is configured to change a propagation direction of incident light. An image sensor 75 is provided on a side of the first lens group 71 facing away from the second lens group 72. The image sensor 75 is configured to collect the incident light to form an image.

Referring to FIG. 3, in some embodiments, the first magnetoelectric sensors has a predetermined number of significant digits, an error smaller than a predetermined distance is tolerable during the focusing of the first lens group 311, and the number of the at least one first magnetoelectric sensor corresponding to each focusing section is determined based on a length of each focusing section, the predetermined number, and the predetermined distance. According to different specifications of the first magnetoelectric sensors, the first magnetoelectric sensor has the predetermined number of significant digits. The significant digits can be 10 bits, 8 bits, etc. The error smaller than the predetermined distance is tolerable during the focusing of the first lens group 311. Within the predetermined distance, the lens module 30 can focus accurately and the obtained images are clear enough. The predetermined distance can be 1 micrometer, 2 micrometers, etc. Here, the first magnetoelectric sensor having the predetermined number of significant digits may mean that a significance digit of the analog-to-digital conversion of the first magnetoelectric sensor is of the predetermined number. In some embodiments, the analog electrical signal output by the first magnetoelectric sensor can also be quantized by the driving chip, and thus the significant digits of the analog-digital conversion of the driving chip is of the predetermined number.

Referring to FIG. 8, for example, in some embodiments, a movement channel P8 of the first lens group includes a first focusing section P81 and a second focusing section P82. Significant digits of a first magnetoelectric sensor 831 are 10 bits. That is, the first magnetoelectric sensor 831 can obtain 210=1,024 quantized values. When the tolerable error is 1 micrometer during focusing of the first lens group 811, the first magnetoelectric sensor 831 with the significant digits of 10 bits can perform accurate focusing within a length of 1,024x1=1,024 micrometers of the first focusing section P81 when the predetermined distance is 1 micrometer. When the length of the first focusing section P81 is smaller than or equal to 1,024 micrometers, i.e., the length of the first focusing section falls within [0, 1,024], it is required to provide only one first magnetoelectric sensor with the significant digits of 10 bits corresponding to the first focusing section P81 for performing the precise focusing of the lens module 80. When a length of the second focusing section P82 is greater than 1,024 micrometers and smaller than or equal to 2,048 micrometers, i.e., the length of the second focusing section P82 falls within [1,024, 2048], it is required to provide a first magnetoelectric sensor 832 and a first magnetoelectric sensor 833 each with the significant digits of 10 bits corresponding to the second focusing section P82 for performing the precise focusing of the lens module 80. Similarly, when the length of the focusing section is greater than 2,048 micrometers, the number of at least one magnetoelectric sensor corresponding to the focusing section can be obtained based on the above embodiments by analogy. Of course, the predetermined distance during the focusing of the lens module 80 can also be 2 micrometers, 3 micrometers, etc., the significant digits of each first magnetoelectric sensor can also be 8 bits, 6 bits, etc., and the first magnetoelectric sensors may be arranged in the similar manner as those in the above embodiments, which is not individually described herein. In this way, a suitable number of first magnetoelectric sensors can be determined, such that the production cost of the lens module 80 can be saved while achieving the precise focusing.

In some embodiments, without considering the production cost, more first magnetoelectric sensors can be arranged on the focusing section, and the embodiments of the present disclosure are not limited in this regard.

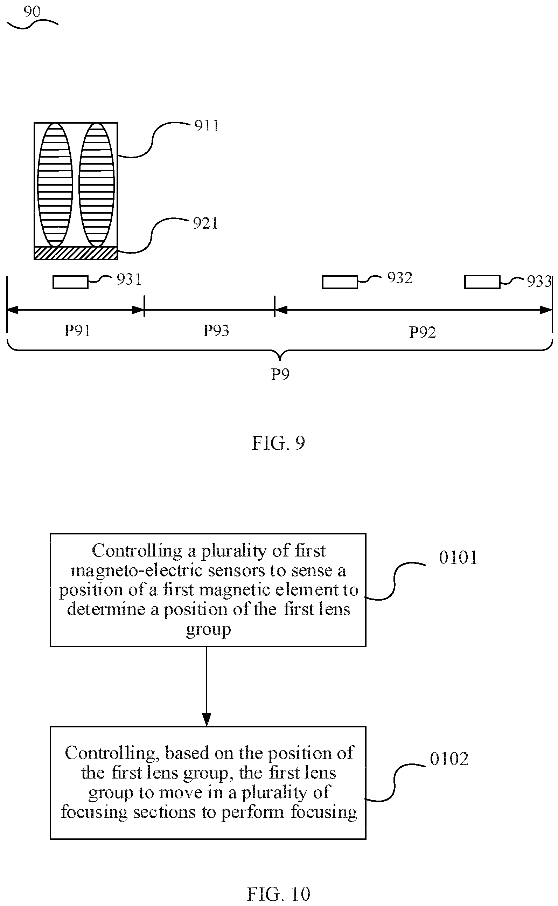

Referring to FIG. 9, a plurality of focusing sections of a lens module 90 may have different lengths, and the number of magnetoelectric sensors corresponding to each focusing section may also be different. In some embodiments, when the lens module 90 is provided with a first zoom factor and a second zoom factor, a movement channel P9 of the first lens group 911 includes a first focusing section P91 corresponding to the first zoom factor, a zooming section P93, and a second focusing section P92 corresponding to the second zoom factor. When the predetermined distance is 1 micrometer, the first focusing section P91 has a length of 1,000 micrometers, the second focusing section P92 has a length of 2,000 micrometers, and the zooming section P93 has a length of 1,000 micrometers. The first focusing section P91 can be provided with a first magnetoelectric sensor 931 having significant digits of 10 bits. The first magnetoelectric sensor 931 having the significant digits of 10 bits can quantify 1,024 micrometers. Since 1,000 micrometers falls within the range of 1,024 micrometers, the precise focusing of the lens module 90 in the first focusing section P91 can be performed. A first magnetoelectric sensor 932 and a first magnetoelectric sensor 933 each having significant digits of 10 bits may be provided in the second focusing section P92. The two first magnetoelectric sensors each having the significant digits of 10 bits can quantify 1,024x2=2,048 micrometers. Since 2,000 micrometers falls within the range of 2,048 micrometers, the precise focusing of the lens module 90 in the second focusing section P92 can be performed. One first magnetoelectric sensor may be arranged in and correspond to the zooming section P93, or no first magnetoelectric sensor may be arranged in the zooming section P93, which is not limited in the embodiments of the present disclosure.

Referring to FIG. 10, a control method according to an embodiment of the present disclosure can be used to control the lens module according to any one of the above embodiments. The lens module includes the movable first lens group, the first magnetic element arranged on the first lens group, and the plurality of first magnetoelectric sensors corresponding to the first magnetic element; the movement channel of the first lens group includes the plurality of focusing sections, and each focusing section corresponds to at least one of the plurality of first magnetoelectric sensors. The control method of the lens module includes: 0101, controlling the plurality of first magnetoelectric sensors to sense a position of the first magnetic element to determine a position of the first lens group; and 0102, controlling, based on the position of the first lens group, the first lens group to move in the plurality of focusing sections to perform the focusing.

The number of focusing sections is related to the number of zoom factors that the lens module can achieve. For example, referring to FIG. 3, the lens module 30 can perform zooming in two focal lengths corresponding to a first zoom factor and a second zoom factor. Accordingly, the lens module 30 may be provided with two focusing sections, i.e., the first focusing section P31 corresponding to the first zoom factor and the second focusing section P32 corresponding to the second zoom factor. Referring to FIG. 4, when the lens module 40 can perform zooming of three focal lengths, i.e., the first zoom factor, the second zoom factor, and the third zoom factor, the lens module 40 may be provided with three focusing sections correspondingly, i.e., the first focusing section P41, the second focusing section P42, and the third focusing section P43. At least one first magnetoelectric sensor can be arranged in each focusing section.

In the related art, due to the poor adjustment accuracy of zoom lenses, the zoom lenses may not be able to achieve accurate focusing, and thus the captured images may be blurry. Since the movement channel P3 of the first lens group 311 includes the plurality of focusing sections and at least one first magnetoelectric sensor is arranged in each focusing section, the first magnetoelectric sensors and the first magnetic element mutually cooperate to equivalently shorten a sensing length of each first magnetoelectric sensor to the first magnetic element. Consequently, the position of the first magnetic element can be more accurately determined to determine the position of the first lens group 311, and the precise focusing of the lens module 30 can be achieved, such that the images captured by the lens module 30 are clearer.

Referring to FIG. 11, in some embodiments, the movement channel of the first lens group further includes the zooming section, and the control method of the lens module includes: 0111, controlling the first magnetoelectric sensor to sense the position of the first magnetic element to determine the position of the first lens group; 0112, controlling the first lens group to switch between the plurality of focusing sections via the zooming section to perform the zooming; and 0113, controlling, based on the position of the first lens group, the first lens group to move in the plurality of focusing sections to perform the focusing.

One, two or more zooming sections may be provided. The number of zooming sections is related to the number of zoom factors that can be achieved by the first lens group.

For example, referring to FIG. 3, when the lens module 30 can achieve the first zoom factor and the second zoom factor, the movement channel P3 of the first lens group 311 is correspondingly divided into the first focusing section P31 corresponding to the first zoom factor, the zooming section P33, and the second focusing section P32 corresponding to the second zoom factor. In this case, it is required to provide only one zooming section P33 to switch the lens module 30 between the first focusing section P31 and the second focusing section P32, thereby performing the zooming between the first zoom factor and the second zoom factor. Referring to FIG. 4, when the lens module 40 can achieve the first zoom factor, the second zoom factor, and the third zoom factor, the movement channel P4 of the first lens group 411 can be correspondingly divided into the first focusing section corresponding to the first zoom factor, the zooming section P44, the second focusing section P42 corresponding to the second zoom factor, the zooming section P45, and the third focusing section P43 corresponding to the third zoom factor. In this case, two zooming sections can be provided, and each of the two zooming sections can be arranged between two focusing sections. In this way, the zooming of the lens module 40 between the first zoom factor and the second zoom factor and between the second zoom factor and the third zoom factor can achieved. Of course, when the lens module 40 can achieve more zoom factors, the number of zooming sections and the number of focusing sections can be adjusted accordingly, which is not described in detail herein.

Referring to FIG. 5, in other embodiments, the plurality of focusing sections may also be directly adjacent to each other without providing the zooming section, which is not specifically limited in the present disclosure.

Referring to FIG. 12, in some embodiments, the lens module further includes the second lens group, the second magnetic element arranged on the second lens group, and the second magnetoelectric sensor corresponding to the second magnetic element; and the control method of the lens module further includes: 0121, controlling the second magnetoelectric sensor to sense a position of the second magnetic element to determine a position of the second lens group; and 0122, controlling, based on the position of the second lens group, the second lens group to move to perform the zooming.

When taking the production cost into consideration, only one second magnetoelectric sensor may be provided. Of course, it is also possible to provide a plurality of second magnetoelectric sensors, which is not limited in the present disclosure.

With reference to FIG. 3 and FIG. 7, the imaging device 70 according to an embodiment of the present disclosure includes an image sensor 75 and a lens module 711 according to any one of the above embodiments. As illustrated in FIG. 3, the lens module 30 includes the movable first lens group 311, the first magnetic element 321 arranged on the first lens group 311, and the plurality of first magnetoelectric sensors corresponding to the first magnetic element 321. The movement channel P3 of the first lens group 311 includes the plurality of focusing sections, and each focusing section corresponds to at least one first magnetoelectric sensor. The control method applied in the lens module 30 includes: controlling the plurality of first magnetoelectric sensors to sense the position of the first magnetic element 321 to determine the position of the first lens group 311, and controlling, based on the position of the first lens group 311, the first lens group 311 to move in the focusing section to perform the focusing. As illustrated in FIG. 7, the lens module 711 is configured to condense light for the image sensor 75. The image sensor 75 may be a Charge Coupled Device (CCD) camera image sensor or a Complementary Metal-Oxide-Semiconductor (CMOS) camera image sensor.

Since the movement channel of the first lens group includes the plurality of focusing sections and at least one first magnetoelectric sensor is arranged in each focusing section, the first magnetoelectric sensors and the first magnetic element mutually cooperate to equivalently shorten the sensing length of each first magnetoelectric sensor to the first magnetic element. Consequently, the position of the first magnetic element can be more accurately determined to determine the position of the first lens group, and the precise focusing of the lens module can be achieved, such that the images captured by the lens module 30 are clearer.

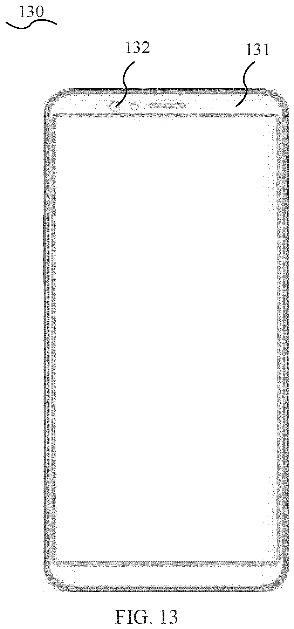

Referring to FIG. 13, the electronic device 130 according to an embodiment of the present disclosure includes an imaging device 132 as described above and the housing 131. The imaging device 132 includes a lens module and an image sensor. The lens module includes a movable first lens group, a first magnetic element arranged on the first lens group, and a plurality of first magnetoelectric sensors corresponding to the first magnetic element. A movement channel of the first lens group includes a plurality of focusing sections, and each focusing section corresponds to at least one first magnetoelectric sensor. The control method applied in this lens module includes: controlling the first magnetoelectric sensor to sense a position of the first magnetic element to determine a position of the first lens group; and controlling, based on the position of the first lens group, the first lens group to move in the plurality of focusing sections to perform the focusing. The imaging device 132 is arranged in the housing 131, which can protect the imaging device 132. A controller (not shown) is configured to control the movement of the lens group based on information from the magnetoelectric sensor, so as to perform the focusing.

In some embodiments, the electronic device 130 further includes a controller (not shown). The controller can be configured to perform the control method according to any one of the above embodiments to control zooming and/or focusing of the lens module.

## Claims

1. A lens module, comprising:
a movable first lens group;
a first magnetic element arranged on the first lens group; and
a plurality of first magnetoelectric sensors corresponding to the first magnetic element,
wherein a movement channel of the first lens group comprises a plurality of focusing sections, the first lens group is movable in each of the plurality of focusing sections to perform focusing, each of the plurality of focusing sections corresponds to at least one of the plurality of first magnetoelectric sensors, and the plurality of first magnetoelectric sensors is configured to sense a position of the first magnetic element to determine a position of the first lens group.

2. The lens module according to claim 1, wherein the movement channel of the first lens group further comprises a zooming section, through which the first lens group is capable of switching among the plurality of focusing sections to perform zooming.

3. The lens module according to claim 1, further comprising:
a second lens group;
a second magnetic element arranged on the second lens group; and
a second magnetoelectric sensor corresponding to the second magnetic element,
wherein the second lens group is movable to perform zooming, and the second magnetoelectric sensor is configured to sense a position of the second magnetic element to determine a position of the second lens group.

4. The lens module according to claim 1, wherein each of the plurality of first magnetoelectric sensors has a predetermined number of significant digits, an error smaller than a predetermined distance is tolerable during the focusing of the first lens group, and a number of the at least one first magnetoelectric sensor corresponding to each of the plurality of focusing sections is determined based on a length of each of the plurality of focusing sections, the predetermined number, and the predetermined distance.

5. The lens module according to claim 4, wherein the predetermined number is 10, the predetermined distance is 1 micrometer, the length of each of the plurality of focusing sections is smaller than 1,024 micrometers, and each of the plurality of focusing sections corresponds to one magnetoelectric sensor.

6. A control method of a lens module, the lens module comprising:
a movable first lens group;
a first magnetic element arranged on the first lens group; and
a plurality of first magnetoelectric sensors corresponding to the first magnetic element,
wherein a movement channel of the first lens group comprises a plurality of focusing sections, and each of the plurality of focusing sections corresponds to at least one of the plurality of first magnetoelectric sensors,
the control method comprising:
controlling the plurality of first magnetoelectric sensors to sense a position of the first magnetic element to determine a position of the first lens group; and
controlling, based on the position of the first lens group, the first lens group to move in the plurality of focusing sections to perform focusing.

7. The control method of the lens module according to claim 6, wherein the movement channel of the first lens group further comprises a zooming section, and the control method of the lens module further comprises:
controlling the first lens group to switch between the plurality of focusing sections via the zooming section to perform zooming.

8. The control method of the lens module according to claim 6, wherein the lens module further comprises:
a second lens group;
a second magnetic element arranged on the second lens group; and
a second magnetoelectric sensor corresponding to the second magnetic element, and
wherein the control method of the lens module further comprises:
controlling the second magnetoelectric sensor to sense a position of the second magnetic element to determine a position of the second lens group; and
controlling, based on the position of the second lens group, the second lens group to move to perform the zooming.

9. The control method of the lens module according to claim 6, wherein each of the plurality of first magnetoelectric sensors has a predetermined number of significant digits, an error smaller than a predetermined distance is tolerable during the focusing of the first lens group, and a number of the at least one first magnetoelectric sensors corresponding to each of the plurality of focusing sections is determined based on a length of each of the plurality of focusing sections, the predetermined number, and the predetermined distance.

10. The control method of the lens module according to claim 9, wherein the predetermined number is 10, the predetermined distance is 1 micrometer, the length of each of the plurality of focusing sections is smaller than 1,024 micrometers, and each of the plurality of focusing sections corresponds to one of the plurality of first magnetoelectric sensors.

11. An imaging device, comprising:
a lens module; and
an image sensor,
wherein the lens module is configured to condense light for the image sensor, the lens module comprises a movable first lens group, a first magnetic element arranged on the first lens group, and a plurality of first magnetoelectric sensors corresponding to the first magnetic element, a movement channel of the first lens group comprises a plurality of focusing sections, the first lens group is movable in each of the plurality of focusing sections to perform focusing, each of the plurality of focusing sections corresponds to at least one of the plurality of first magnetoelectric sensors, and the plurality of first magnetoelectric sensors is configured to sense a position of the first magnetic element to determine a position of the first lens group.

12. The imaging device according to claim 11, wherein the movement channel of the first lens group further comprises a zooming section, through which the first lens group is capable of switching among the plurality of focusing sections to perform zooming.

13. The imaging device according to claim 11, wherein the lens module further comprises a second lens group, a second magnetic element arranged on the second lens group, and a second magnetoelectric sensor corresponding to the second magnetic element, the second lens group is movable to perform zooming, and the second magnetoelectric sensor is configured to sense a position of the second magnetic element to determine a position of the second lens group.

14. The imaging device according to claim 11, wherein each of the plurality of first magnetoelectric sensors has a predetermined number of significant digits, an error smaller than a predetermined distance is tolerable during the focusing of the first lens group, and a number of the at least one first magnetoelectric sensors corresponding to each of the plurality of focusing sections is determined based on a length of each of the plurality of focusing sections, the predetermined number, and the predetermined distance.

15. The imaging device according to claim 14, wherein the predetermined number is 10, the predetermined distance is 1 micrometer, the length of each of the plurality of focusing sections is smaller than 1,024 micrometers, and each of the plurality of focusing sections corresponds to one magnetoelectric sensor.

16. An electronic device, comprising:
a housing; and
an imaging device arranged in the housing,
wherein the imaging device comprises a lens module and an imaging sensor; the lens module is configured to condense light for the image sensor; the lens module comprises a movable first lens group, a first magnetic element arranged on the first lens group, and a plurality of first magnetoelectric sensors corresponding to the first magnetic element; a movement channel of the first lens group comprises a plurality of focusing sections, the first lens group is movable in each of the plurality of focusing sections to perform focusing; each of the plurality of focusing sections corresponds to at least one of the plurality of first magnetoelectric sensors; and the plurality of first magnetoelectric sensors is configured to sense a position of the first magnetic element to determine a position of the first lens group.

17. The electronic device according to claim 16, wherein the movement channel of the first lens group further comprises a zooming section, through which the first lens group is capable of switching among the plurality of focusing sections to perform zooming.

18. The electronic device according to claim 16, wherein the lens module further comprises a second lens group, a second magnetic element arranged on the second lens group, and a second magnetoelectric sensor corresponding to the second magnetic element, the second lens group is movable to perform zooming, and the second magnetoelectric sensor is configured to sense a position of the second magnetic element to determine a position of the second lens group.

19. The electronic device according to claim 16, wherein each of the plurality of first magnetoelectric sensors has a predetermined number of significant digits, an error smaller than a predetermined distance is tolerable during the focusing of the first lens group, and a number of the at least one first magnetoelectric sensors corresponding to each of the plurality of focusing sections is determined based on a length of each of the plurality of focusing sections, the predetermined number, and the predetermined distance.

20. The electronic device according to claim 19, wherein the predetermined number is 10, the predetermined distance is 1 micrometer, the length of each of the plurality of focusing sections is smaller than 1,024 micrometers, and each of the plurality of focusing sections corresponds to one magnetoelectric sensor.
